# EUROPEAN PATENT SPECIFICATION

(11) **EP 4 321 397 B1**
(45) Date of publication and mention of the grant of the patent: **26.03.2025**
(21) Application number: 22190166.3
(22) Date of filing: 12.08.2022
(51) Int. Cl.: B60T 13/38

(54) **PARK BRAKE MODULE WITH RELAY VALVE AND SAFETY PISTON**
PARKBREMSMODUL MIT RELAISVENTIL UND SICHERHEITSKOLBEN
MODULE DE FREIN DE STATIONNEMENT AVEC SOUPAPE DE RELAIS ET PISTON DE SÉCURITÉ

(43) Date of publication of application: 14.02.2024
(73) Proprietor: ZF CV Systems Europe BV, 1170 Brüssel (BE)
(72) Inventor: KUNCEWICZ, Paulina, 50-326 Wroclaw (PL); LANGO, Adam, 54-034 Wroclaw (PL); RANGARAJ, Vinoth Kumar, 600053 Chennai (IN); RIEDIGER-JANISCH, Karl-Heinz, 30455 Hannover (DE); TOMA, Leszek, 52-013 Wroclaw (PL)
(74) Representative: Ohlendorf, Henrike

(56) References cited:
- EP-A1- 3 626 564
- US-A1- 2008 258 542
- US-A1- 2017 267 221
- US-A1- 2020 086 840
- US-A1- 2021 387 604
- US-B2- 9 157 543

## Description

The invention relates to a park brake module for actuating park brake cylinders of a commercial vehicle, the park brake module comprising a control port for receiving a control pressure, a supply port for receiving supply pressure, an exhaust, a working port for providing a brake release pressure to the park brake cylinders, a relay valve unit for receiving the control pressure and for providing the brake release pressure to the working port dependent on the control pressure, a safety port for receiving a safety pressure, a safety unit for connecting the working port to the exhaust, when the safety pressure is supplied to the safety unit via the safety port, wherein the relay valve unit comprises a relay piston slidably arranged in a relay cylinder for performing a working stroke between an exhaust position and a fully open position, wherein the working port is in fluid communication with the exhaust when the relay piston is in the exhaust position and wherein the brake release pressure is provided to the working port, when the relay piston is in at least a partially open position, wherein the safety unit comprises a safety piston slidably arranged in a safety cylinder for performing a safety stroke between a neutral position and a safety position, wherein the safety piston is slidable from the neutral position to the safety position by providing the safety pressure to the safety unit. The invention further relates to a method for controlling a park brake function of a brake system, a brake system and a commercial vehicle.

Park brake modules, which are also referred to as hand brake modules, are used to actuate park brakes of a vehicle. Such park brakes are usually spring-loaded park brakes of a pneumatic brake system for a commercial vehicle. In spring-loaded brakes, a spring applies the brake when a park brake cylinder is depressurized. The spring-loaded actuation of the park brakes ensures braking of the vehicle when the vehicle is parked for a long time and/or the pneumatic brake system is de-pressurized. For releasing the spring-loaded brakes, compressed air at a brake release pressure (compressed air at a pressure level sufficient to release the brakes) is provided to the park brake cylinders such that the spring-loaded brakes are released (opened) against the closing force applied by the spring. For closing the park brakes, air is exhausted from the park brake cylinders via an exhaust of the park brake module.

Compressed air at the brake release pressure (at a pressure level sufficient to release the brakes) is supplied to one or more brake cylinders of the park brake via the park brake module. Park brake modules therefore generally comprise a working port for connecting at least one park brake cylinder. For receiving pressurized air at a supply pressure, park brake modules further comprise a supply port connectable to a compressed air supply. Park brake modules may comprise a single working port for connecting all park brake cylinders of a commercial vehicle or may comprise multiple working ports for connection a single park brake cylinder and/or groups of park brake cylinders.

In some specific brake systems, the park brake of a vehicle is utilized for braking the vehicle during operation (e.g. while moving). The brake force provided by the spring-loaded park brake is then preferably controllable by modulating the brake release pressure applied to the park brake cylinders by the park brake module. The brake release pressure supplied to the park brake cylinders depends on a control pressure provided to the park brake module via the control port. In order to allow for fast actuation of the brake cylinders, a high volume flow of air is required. Generally, park brake modules utilize a relay valve unit for rapidly providing a high volume flow of air. The relay valve unit receives the control pressure and provides the brake release pressure to the working port dependent on the control pressure. The control pressure modulates a supply pressure provided to the relay valve unit by moving a relay piston of the relay valve unit and provides the modulated pressure as the brake release pressure to the working port. A pressure level in a control line connected to the control port is kept substantially constant during braking allowing for exact control of the park brakes.

In case of an emergency, in particular in case of malfunctioning service brakes of the vehicle, a brake force is applicable to the vehicle via the park brakes. This safety function is generally established by a safety unit having a safety piston. During an emergency, the safety piston of the safety unit overrides the function of the relay piston and ensures release of air from the brake cylinders. To ensure correct application of the park brakes the safety piston of known park brake modules is fixed to the relay piston. During normal operation, the safety piston moves along with the relay piston. The safety piston therefore performs superfluous movements during normal operation resulting in high wear and high resistance on the relay piston as well as the safety piston. Due to the safety pistons resistance, high volume flows of air are required for moving the relay piston during normal operation which results in reduced reaction time and increased operating cost. Moreover, the initial pressure level required for moving the pistons (crack pressure) is increased.

EP 3 626 564 A1 proposes a brake module having a first control piston that is selectively coupled to a second control piston such that it only interacts with the second control piston in case a redundancy brake request is provided to the brake module. Through this, a service brake control pressure as well as a redundancy brake request may be converted into a spring brake pressure. According to EP 3 626 564 A1 the higher one of the brake request associated with these pressures shall dominate, when a parking brake control pressure and a service brake control pressure are supplied simultaneously, which results in substantially identical braking behavior during normal operation as well as during redundancy braking. Therefore, the effective areas of the first control piston and the second control piston need to be substantially equal in the brake module of EP 3 626 564 A1.

The inventors have found that in the design of EP 3 626 564 A1 a safety or redundancy function cannot always be ensured, since a non-actuation may occur when the same pressure level is provided to both pistons. Moreover, even if there is a small pressure difference between the pressures applied to the first control piston and the second control piston respectively, the system may not react at all due to the minimum force required for overcoming friction or the system reaction may be too slow. It is therefore an object of the invention to provide a park brake module that has an improved reliability and/or a reduced reaction time.

In order to solve this object, the present invention proposes in a first aspect of the invention a park brake module of the aforementioned type, wherein the safety piston and the relay piston are operatively connected such that the relay piston is slidable between the exhaust position and the open position independently of the safety piston when the safety piston is in the neutral position, and such that the safety piston is configured to at least partially move the relay piston towards the exhaust position when advancing the safety position, wherein a first safety piston effective area of the safety piston is larger than a relay piston effective area of the relay piston, and wherein a first effective area ratio between the first safety piston effective area and the relay piston effective area has a value of 1.2 or larger. Preferably, the safety piston and the relay piston are only temporarily connected or attached to each other. The safety piston is preferably only connected to the relay piston under certain operation conditions. As long as the safety piston remains in the neutral position, the relay piston is configured to move independently and/or freely of the safety piston. During normal operation, the relay piston moves independently in order to provide the desired brake release pressure to the working port of the brake module while the safety piston remains in the neutral position. Hence, the safety piston remains static or inactive during normal operation. Wear on the safety piston as well as friction is reduced. Less air is required for moving the relay piston and operating costs can be reduced. It shall be understood that independent movement of the relay piston only refers to the fact that the relay piston is configured to move while the safety piston remains substantially static (in the neutral position). The relay piston and the safety piston may however still contact one another during such a movement of the relay piston. Preferably, the relay piston is guided by the safety piston. The relay piston may then move independently of the safety piston while its movement direction is guided or forced by the safety piston. Other preferred values for the first effective area ratio include but are not limited to: 1.5, 1.7, 2.0, 2.5, 3.0, 3.5, 4.0, 4.5, 5.0, 5.5, 6.0, or 7.0.

If however, the safety piston is in the safety position, the relay piston is locked to the exhaust position such that air is released from the park brake cylinders connected to the working port via the exhaust of the park brake module. When the safety piston is in the safety position, the relay piston cannot be moved to an at least partially open position by applying a control pressure in the normal operating range to the relay valve unit. The safety piston overrides a function of the relay piston.

The safety piston effective area of the safety piston is larger than the effective area of the relay piston such that when an equal pressure level is supplied to the safety piston and the relay piston a resulting force provided by the safety piston is larger than a corresponding resulting force provided by the relay piston. The effective areas are the surface areas of the safety piston and the relay piston respectively that are affected by a pressure differential applied to the respective piston. The effective area is usually dominated by the surface area or surface areas of the piston oriented transverse to the pistons direction of motion. The force on the respective piston resulting from the applied pressure differential may be calculated by multiplying said pressure differential with the effective area of the piston (force = pressure differential x effective area). The pressure differential is the pressure level difference between two opposite sides of the respective piston. The effective area ratio represents the quotient of the safety piston effective area and the relay piston effective area. The quotient can be calculated by dividing the safety piston effective area by the relay piston effective area. The inventors have found that an effective area ratio of 1.2 or larger ensures the overriding function of the safety piston while an identical pressure level is provided on the safety piston and the relay piston.

Preferably, the effective area ratio has a value in a range of 1.2 to 10, preferably 1.2 to 10, preferably 1.2 to 10 or larger, preferably 1.2 to 8, preferable 2 or larger, 3 or larger, 4 or larger or 5 or larger. By limiting the upper value of the effective area ratio, it is ensured that a certain difference in pressure levels of the relay piston and the safety piston has to be provided (i.e. to overcome friction) before the safety piston overrides the relay piston. Therefore, dominance of the safety piston over the relay piston is limited.

The safety pressure is provided via a safety port of the park brake module. Preferably, the safety port is configured to be connected to a compressed air supply of a vehicle brake system for receiving supply pressure. Preferably, the supply port functions as both the supply port as well as the safety port. Preferably, the safety port is configured to be connected to a pressure modulator or a brake valve, particularly preferred to a foot brake valve, a front axle brake modulator and/or a rear axle brake modulator.

The exhaust is configured to release air to the environment. It shall however be noted, that the exhaust may comprise an exhaust silencer and/or may be connected to a conduit, pipe, snorkel or other flow channel for releasing air at a position spaced apart from the park brake module.

In a first embodiment of the invention, the safety stroke of the safety piston is equal to or larger than the working stroke of the relay piston. The safety piston preferably performs the safety stroke along a safety stroke axis that is parallel, particularly preferred congruent, to a respective working stroke axis of the relay piston. In that case, independent movement of the relay piston may be easily ensured by providing a safety stroke larger than the working stroke. However, a safety stroke larger than the working stroke is also preferred if the safety stroke axis is not parallel to the working stroke axis.

Preferably, the safety piston and the relay piston are positively connected when the safety piston is in the safety position. A positive connection is easily releasable when the safety piston returns to the neutral position. Moreover, a positive connection is releasable without damaging any of the connecting members. The positive connection further allows for a safe fixation of the relay piston. The safety piston then reliably inhibits movement of the relay piston. Preferably, the safety piston and the relay piston may alternatively or additionally be connected via a friction connection when the safety piston is in the safety position

According to a preferred embodiment, the relay piston is slidably arranged on a safety piston shaft of the safety piston. The safety piston shaft of the safety piston guides the relay piston while the relay piston performs the working stoke. This allows for a compact design and additional guide elements may be avoided such that manufacturing, assembly, and/or procurement costs are reduced. To reduce wear on the relay piston, the relay piston preferably comprises guide bushes for sliding on the safety piston shaft. In a particularly preferred embodiment, the park brake module comprises one or more seals, preferably lip seals, for sealing gaps formed between the safety piston shaft and the relay piston.

Preferably, the park brake module comprises a fixing element, wherein the fixing element is connected to the safety piston and wherein a contact face of the fixing element abuts the relay piston on a locking side when the safety piston is in the safety position. The fixing element allows for easy assembly of the park brake module. Preferably, the fixing element comprises a fixing element threaded portion for engaging a corresponding safety piston threaded portion formed on the safety piston. Additionally or alternatively the fixing element may comprise or be formed as a lock ring and/or locking pin. It is alternatively preferred that the fixing element is connected to the relay piston instead of the safety piston. Preferably, the positive connection between the safety piston and the relay piston is formed by the contact face abutting the relay piston when the safety piston is in the safety position.

In a further preferred embodiment, the safety piston shaft comprises a guide portion for guiding the relay piston and a fixing portion for engaging the fixing element of the park brake module, wherein the fixing portion extends from a guide portion end of the guide portion. The guide portion guides the relay piston during the working stroke. Preferably, a guide portion length of the guide portion is larger than or equal to the working stroke. In this case, the relay piston can move along the guide portion without interfering with other elements of the safety piston. The fixing portion preferably extends from the guide portion end opposite a safety piston head of the safety piston. By separating the guide portion and the fixing portion, assembly of the park brake module is facilitated. Moreover, the fixing element engage the fixing portion without damaging the guide portion.

Preferably, the relay piston comprises a relay piston interface for receiving the safety piston shaft, wherein the relay piston interface comprises a fixing flange having a fixing hole. The relay piston interface preferably comprises an inner wall corresponding with the safety piston shaft. It is particularly preferred that the inner wall is a substantially cylindrical inner wall for sliding along the safety piston shaft. It shall be noted, that a small gap may be formed between the cylindrical wall and the safety piston shaft to allow for relative movement of the relay piston with regard to the safety piston. The fixing flange extends from the inner wall, preferably perpendicular to the inner wall. The fixing flange acts as an end stop that limits relative movement of the relay piston with regard to the safety piston in a first direction. The relay piston is slidable along the safety piston shaft until the fixing flange abuts the safety piston shaft, preferably on the guide portion end. Further movement of the relay piston relative to the safety piston in said direction is then prevented by a positive connection of the fixing flange and the guide portion end. The fixing hole extends through the fixing flange, preferably in a direction parallel to a shaft axis of the safety piston shaft. It is particularly preferred that a central fixing axis of the fixing hole is parallel or congruent to a central relay piston interface of the relay piston interface. An inner fixing hole diameter is preferably larger than an outer fixing portion diameter of the safety piston shafts fixing portion. The fixing portion of the safety piston may then partially or fully extend through the fixing hole when the guide portion end abuts the fixing flange.

Preferably, the fixing portion and/or the fixing element extends through the fixing hole from an insertion side of the relay piston opposite the locking side, and wherein the fixing flange is configured to abut the safety piston shaft. It is preferred, that the fixing portion at least partially extends through the fixing hole from the insertion side and that the fixing element at least partially extends towards the insertion side from the locking side. The fixing element preferably at least partially engages the fixing portion in the fixing hole. It is further preferred that only the fixing elements extends through the fixing hole.

In a preferred embodiment, a first fixing clearance between the contact face of the fixing element and a first flange side of the fixing flange oriented towards the contact face equals a first relay piston clearance between the relay piston and a open position end stop of the relay cylinder when the safety piston is in the neutral position. Preferably, the contact face abuts the first flange side when the safety piston is in the safety position. Movement of the relay piston in the relay cylinder is limited by the open position end stop of the relay cylinder. The first relay piston clearance is the distance between the relay piston and the end stop measured along a movement path of the relay piston in the relay cylinder. When the relay piston moves within the relay cylinder, it slides along the guide portion of the safety piston shaft. The fist shoulder side of the fixing flange is oriented towards the contact face. The contact face abuts the fixing flange on the first flange side when the safety piston is in the safety position. When the safety piston is in the neutral position, the fixing element may be spaced apart from the fixing flange. The first fixing clearance is then formed between the contact face of the fixing element and the first flange side. A possible range of movement of the relay piston in the relay cylinder towards the open position end stop is not limited by the fixing element when the safety piston is in the neutral position, since the first fixing clearance then equals the relay piston clearance. On the other hand, the contact face abutting the first shoulder substantially prevents movement of the relay piston towards the open position end stop when the safety piston is in the safety position. In a preferred alternative embodiment, the first relay piston clearance may be larger than the first fixing clearance when the safety piston is in the neutral position, particularly preferred by a margin of 0.5% or more, preferably 1% or more, preferably 5% or more, preferably 10% or more of the maximum first relay piston clearance. The maximum first relay piston clearance is the maximum clearance between the relay piston and the open position end stop reachable during operation.

It is preferred that a second relay piston clearance between the relay piston and an exhaust position end stop of the relay cylinder equals a second fixing clearance between the guide portion end and a second flange side of the fixing flange when the safety piston is in the neutral position, and wherein the second relay piston clearance vanishes and the second fixing clearance is maximized when the safety piston is in the safety position. The second flange side preferably is a side of the fixing flange opposite the first side. Preferably, a full range of motion of the relay piston in the relay cylinder is defined between the open position end stop and the exhaust position end stop. This range of motion may however limited by the safety piston, in particular when the safety piston is in the safety position. When the safety piston is in the safety position, the relay piston preferably abuts the open position end stop and is locked in position. The second relay piston clearance then reaches its maximum value. At the same time, the second fixing clearance has its maximum value and the first fixing clearance vanishes, as the fixing element abuts the first flange side. When the safety piston is in the neutral position, the fixing element is spaced apart from the fixing flange such that the relay piston is movable in the relay cylinder. In a preferred alternative embodiment, the second relay piston clearance may be larger than the second fixing clearance when the safety piston is in the neutral position, particularly preferred by a margin of 1% or more, preferably 5% or more, preferably 10% or more of the maximum second relay piston clearance. The maximum second relay piston clearance is the maximum clearance between the relay piston and the exhaust position end stop reachable during operation.

Preferably, the fixing element is slidably received in a guide element of the relay valve unit. Since the fixing element is fixed to the relay piston, the relay piston is also guided by the guide element. A transfer of loads from the relay piston to the safety piston via the guide portion of the safety piston and the relay piston interface of the relay piston is substantially reduced or inhibited. This prevents miss-alignments between the safety piston and the relay piston resulting in increased wear or damages. In another embodiment, the relay piston may only be guided by the guide element. In this case, no contact is required between the guide portion of the safety piston shaft and the relay piston interface of the relay piston.

In a further preferred embodiment, the guide element is configured for guiding a relay valve member of the relay valve unit, wherein the relay piston is configured to move the relay valve member. During operation, the relay piston moves the relay valve member dependent on a pressure (preferably the control pressure). Preferably, the relay valve member is configured to modulate a supply pressure supplied to the relay valve unit based on the control pressure. Preferably, break release pressure is only supplied to the working port when a control pressure is supplied to the relay valve unit. The relay valve member is preferably configured to seal a fluid passage between a relay valve supply port and a relay valve working port when no control pressure is supplied to the relay valve unit. The relay valve supply port is preferably connected to the supply port and/or the relay valve working port is preferably connected to the working port of the park brake module.

According to a preferred embodiment, the park brake module further comprises an electronically controlled safety valve arranged in a flow path between the safety port and the safety cylinder, wherein the safety valve is configured to block the flow path or to connect the safety port and the safety cylinder based on electronic control signals. In order to move the safety piston to the safety position, pressurized air at the safety pressure is supplied to the safety cylinder for acting on the safety piston. The safety cylinder is therefore connectable to the safety port via the flow path. The electronically controlled safety valve controls the supply of safety pressure to the safety cylinder. **If** the safety piston shall return to or remain in the neutral position, the electronically controlled safety valve blocks the flow path such that there is no fluid connection between the safety cylinder and the safety port. For moving the safety piston to the safety position, the electronically controlled safety valve unblocks the flow path such that pressurized air at the safety pressure is supplied to the safety cylinder. The safety valve allows for direct control of the safety piston by the park brake module. Safety pressure may then be continuously supplied to the safety port. Preferably, the electronically controlled safety valve is configured to modulate the safety pressure. The safety valve may also function in an on/off manner. Modulated pressure is then preferably provided to the safety port by an external modulator, such as a foot brake valve, rear axle modulator or front axle modulator.

In a second aspect of the invention, the above stated problem is solved by a method for controlling a park brake function of a brake system according to the first aspect of the invention, the method comprising the steps of: providing a brake release pressure to park brake cylinders via a relay valve unit as a normal operation function, and overriding the normal operation function of the relay valve unit by a safety unit for exhausting the park brake cylinders, wherein a relay piston of the relay valve unit is movable independently of the safety unit during the normal operation function. The normal operation function is not limited to released park brakes. The park brake pressure supplied to the park brake cylinders in the normal operation function may also equal an environmental pressure such that the park brakes may also be actuated or released in the normal operation function. During the step of overriding the normal operation function, the park brake cylinders are exhausted independently of the state of the relay valve unit. Even if the relay valve unit would normally (in the normal operation function) supply a release pressure to the park brake cylinders the park brakes are still actuated since the safety units overrides the normal operation function. A safety function is thereby ensured. During the normal operation function, the relay piston moves independently of the safety unit. Excessive wear on the safety unit is prevented and pressurized air is saved. Preferably, the step of overriding the normal operation function comprises positive locking the relay piston to an exhaust position with the safety unit. It is further preferred, that the normal operation function comprises sliding of the relay piston along a safety piston shaft of a safety piston of the safety unit.

The present invention solves the above-mentioned problem in a third aspect with a brake system for a commercial vehicle comprising a park brake module according to the first aspect of the invention. According to a fourth aspect of the invention, the above-mentioned problem is solved by a commercial vehicle comprising a brake system according to the third aspect of the invention.

It shall be understood that the method for controlling a park brake function of a brake system according to a second aspect of the invention, the park brake system according to the third aspect of the invention and the commercial vehicle according to the fourth aspect of the invention comprise similar and identical embodiments which are in particular described in the dependent claims. In so far, reference is made to the above description of the park brake module according to the first aspect of the invention.

For a more complete understanding of the invention, the invention will now be described in detail with reference to the accompanying drawings. The detailed description will illustrate and describe what is considered as a preferred embodiment of the invention. It is therefore intended that the invention may not be limited to the exact form and detail shown and described herein, nor to anything less than the whole of the invention disclosed herein and as claimed herein after. Further, the features described in the description, the drawings and the claims disclosing the invention may be essential for the invention considered alone or in combination. In particular, any reference signs in the claims shall not be construed as limiting the scope of the invention. The wording "comprising" does not exclude other elements or steps. The word "a" or "an" does not exclude the plurality. In the accompanying drawings:
- Fig. 1: illustrates a vehicle having a brake system;
- Fig. 2: shows a sectional view of an embodiment of a park brake module;
- Fig. 3: shows a detail view of the park brake module wherein the safety piston is in a safety position;
- Fig. 4: shows a detail view of the park brake module wherein the safety piston is in a neutral position; and
- Fig. 5: illustrates an embodiment of a method for controlling a park brake function of a brake system.

A vehicle 200, in particular a commercial vehicle 202, comprises a front axle FA and a rear axle RA. For braking the front axle FA and the rear axle RA the vehicle 200 comprises a brake system 100.

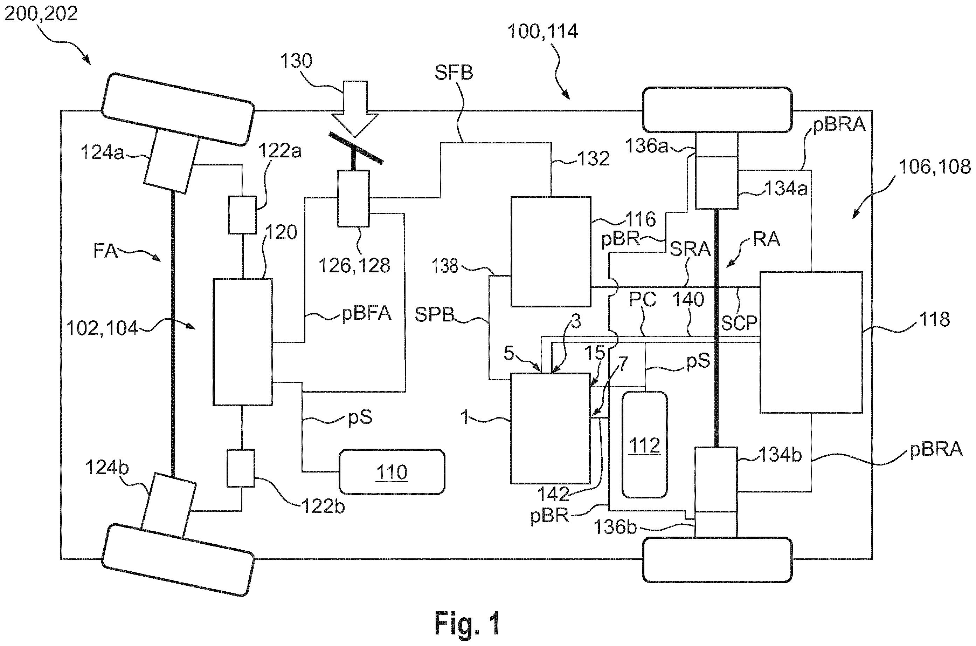

The brake system 100 comprises a first brake circuit 102 being a front axle brake circuit 104 for the front axle FA, and a second brake circuit 106 being a rear axle brake circuit 108 for the rear axle RA. Furthermore, the brake system 100 may comprise a trailer control circuit (not shown in Fig.1). For providing compressed air at a supply pressure pS, the brake system 100 comprises a first compressed air supply 110 (or a first reservoir 110). In this embodiment, the first compressed air supply 110 supplies the first brake circuit 102. The second brake circuit 106 is supplied by a second compressed air supply 112, which also provides compressed air at the supply pressure pS. Here, the second compressed air supply 112 is further connected to a park brake module 1, in particular to a supply port 3 of the park brake module 1. However, alternatively or in addition to second compressed air supply 112, the first compressed air supply 110 may supply compressed air at the supply pressure pS to the park brake module 1. An air treatment/processing system, which is not shown in Fig. 1, provides compressed air to the first and second compressed air supplies 110, 112.

In this embodiment, the brake system 100 is an electropneumatic brake system 114 including an electronic control unit (ECU) 116 for controlling its elements. The ECU 116 controls at least a rear axle modulator 118 provided for the rear axle RA. A front axle modulator 120 is connected to first and second front axle ABS-modules 122a, 122b which in turn are connected to front axle brake actuators 124a, 124b. The front axle modulator 120 is pneumatically connected to a foot brake module 126. In this embodiment, the foot brake module 126 is formed as an electropneumatic foot brake module 128. Upon actuation (represented by arrow 130) by a user or upon electronic/pneumatic actuation the foot brake module 126 provides a front axle brake pressure pBFA to the front axle modulator 120.

The foot brake module 126 is further connected to the ECU 116 via a foot brake signal line 132. Upon actuation, the foot brake module 126 provides foot brake signals SFB proportional to the actuation, thereby reflecting the driver's brake demand. The ECU 116 provides rear axle brake signals SRA to the rear axle modulator 118, which then provides a corresponding rear axle brake pressure pBRA to rear axle brake actuators 134a, 134b of the rear axle RA. The rear axle brake actuators 134a, 134b are formed as Tristop^{®} cylinders configured to provide a service brake function as well as a park brake function. For providing the park brake function, the Tristop^{®} cylinders each comprise a park brake portion having a park brake cylinder 136a, 136b. The park brake cylinders 136a, 136b and the service brake could also be independently formed. When the rear axle brake pressure pBRA is supplied to the rear axle brake actuators 134a, 134b service brake portions of the Tristop^{®} cylinders are actuated for braking the rear axle RA.

The park brake portion of the rear axle brake actuators 134a, 134b is configured for braking the rear axle RA of the vehicle 200 by de-pressurizing or releasing the pressure from an intermediate chamber (not shown in Fig. 1) of actuators 134a, 134b such that parking brake is applied due to the extension of one or more springs (not shown in Fig. 1) within actuators 134a, 134b. When the vehicle 200 is in motion, a brake release pressure pBR is supplied to said intermediate chamber the rear axle brake actuators 134a, 134b so that the extended spring is compressed, thereby releasing the parking brake. In any case, such an operation of Tristop^{®} actuators is known from e.g., page 35 of the document published at https://www.wabco-customercentre.com/catalog/docs/8150100033.pdf

The brake release pressure pBR is provided to the rear axle brake actuators 134a, 134b by the park brake module 1. The ECU 116 is configured to supply park brake signals SPB to the park brake module via park brake signal line 138 for controlling a safety function of the brake system 100. A control port 5 of the park brake module 1 is further connected to the rear axle modulator 118 via control line 140 for receiving a control pressure pC. The rear axle modulator 118 provides the control pressure pC based on control pressure signals SCP received from the ECU 116. Based on the control pressure pC and/or the park brake signals SPB, the park brake module 100 provides the brake release pressure pBR to the park brake cylinders 136a, 136b via a working port 7 connected to a brake release pressure line 142.

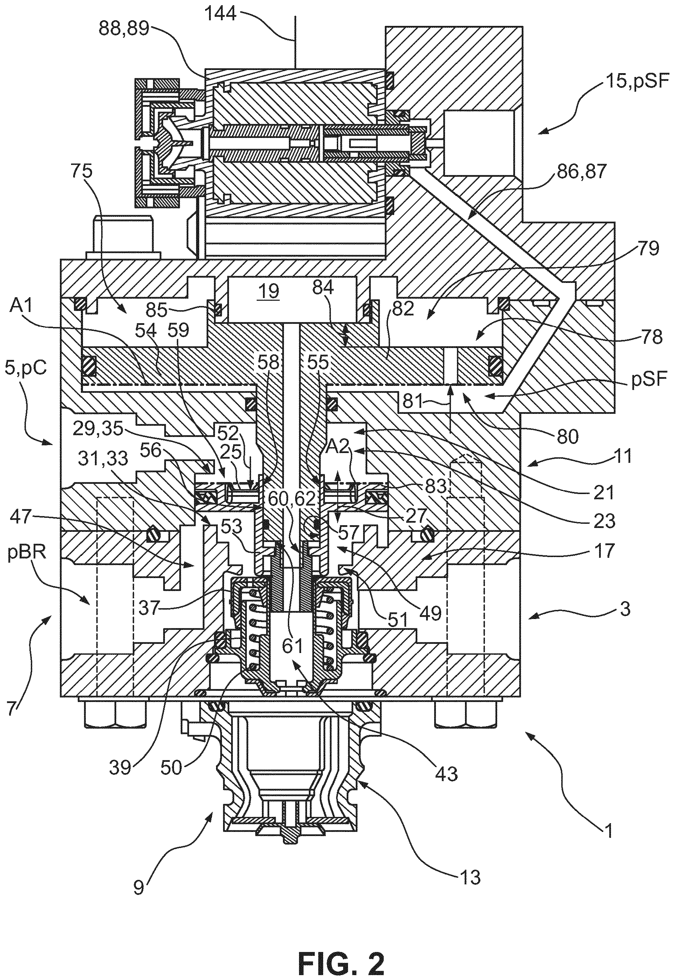

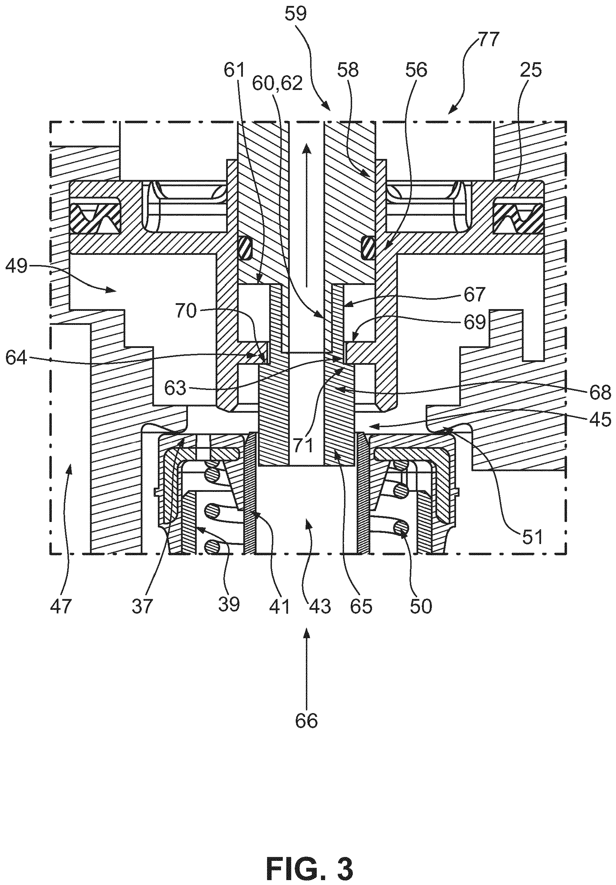

The park brake module 1 will now be described in further detail with regard to Figs. 2 and 3. Figure 2 shows a cut view of the park brake module 1 comprising the supply port 3, the control port 5, the working or output port 7 and an exhaust 9. While the control port 3, the supply port 5 and the working port 7 are formed on a main body 11 of the park brake module 1, the exhaust 9 is formed by an exhaust silencer or noise dampener 13 attached to the main body 11. A venting guide may also form the exhaust 9. The park brake module 1 further comprises a safety port 15 for receiving a safety pressure pSF. In the embodiment of the brake system 100 shown in Fig. 1, the safety port 15 is connected to the second compressed air supply 112 such that the supply pressure pS forms the safety pressure pSF. In alternative preferred embodiments, the safety port 15 may be connected to the front axle modulator 120, the rear axle modulator 118, the foot brake module 126 and/or a trailer control module. The function of the safety pressure pSF will be described later.

The park brake module 1 comprises a relay valve unit 17 and a safety unit 19. The relay valve unit 17 is configured to receive the control pressure pC via the control port 5. Dependent on the control pressure pC the relay valve unit 17 provides pressurized air at the brake release pressure pBR to the working port 7. Besides possible leakages, there is no fluid connection between the control port 5 and the working port 7. The control pressure pC is only utilized for controlling the pressure level of the brake release pressure pBR supplied to the working port 7. The control port 5 is in fluid communication with a relay cylinder 21, specifically a first relay valve chamber 23 formed between the relay cylinder 21 and a relay piston 25 of the relay valve unit 17. In this embodiment the first relay valve chamber 23 is only connected to the control port 5, such that outflow of pressurized air from the first relay valve chamber 23, the control port 5, and the control line 140 (c.f. Fig 1) is substantially prevented. This allows for exact control and rapid changes of a pressure level of the control pressure pC.

The relay piston 25 is slidably arranged in the relay cylinder 21 such that it is able to perform a working stroke (represented by arrow 27) between an exhaust position 29 and a fully open position 31. The range of motion of the relay piston 25 between the exhaust position 29 and the fully open position 31 is defined by an open position end stop 33 and an exhaust position end stop 35 of the relay cylinder 21. In the exhaust position 29, the relay piston 25 abuts the exhaust position end stop 35 and in the fully open position 31, the relay piston 25 abuts the open position end stop 33.

The detail of the relay valve unit 17 depicted in Fig. 3 shows that the relay piston 25 is spaced apart from a relay valve member 37 when the relay piston 25 is in the exhaust position 29. The relay valve member 37 is slidably arranged on a guide element 39. An air guide 41 of the guide element 39 having a guide channel 43 extends through a relay valve member orifice 45 of the relay valve member 37 such that the working port 7 is in fluid communication with the exhaust 9 via a working port channel 47, a second relay valve chamber 49, the relay valve member orifice 45 and the guide channel 43 when the relay piston 25 is in the exhaust position 29. Pressurized air is then released from the park brake cylinders 136a, 136b (c.f. Fig. 1) through the brake release pressure line 142 (c.f. Fig. 1), the working port 7 and the exhaust 9. Springs (not shown in the figures) in the park brake cylinders 136a, 136b (c.f. Fig. 1) are released and park brakes of the vehicle 200 (c.f. Fig. 1) are applied.

A valve member spring 50 received in the guide element 39 biases the relay valve member 37 into sealing contact with a valve seat 51 formed on the main body 11. When the relay valve member 37 abuts the valve seat 51 it separates the working port 7 from the supply port 3 such that no brake release pressure pBR is supplied to the working port 7 when the relay piston 25 is in the exhaust position 29. Furthermore, the relay valve member 37 separates the second relay valve chamber 49 from the supply port 3 and prevents leakage of supply pressure pS through exhaust 9.

For releasing the park brakes of the vehicle 200 (c.f. Fig. 1), the brake release pressure pBR must be applied to the park brake cylinders 136a, 136b (c.f. Fig. 1) by moving the relay piston 25 to an at least partially open position (a position between the exhaust position 29 and the fully open position 31 wherein the supply port 3 is in fluid communication with the working port 7). In the partially open position, the relay valve member 37 is moved downwards with respect to Fig. 1 such that the pressurized air may flow from the supply port 3 to the working port 7. For moving the relay piston 25, a control pressure pC above the environmental pressure level is supplied to the first relay valve chamber 23 via the control port 5. Since the second relay valve chamber 49 arranged on an opposite side of the relay piston 25 is in fluid communication with the exhaust 9, a pressure differential is established between the first relay valve chamber 23 and the second relay valve chamber 49. The pressure differential results in a relay piston force (represented by arrow 52) on the relay piston 25 which moves the relay piston 25 from the exhaust position 29 towards the open position 31 (downwards with respect to Fig. 2).

A relay piston shaft 53 of the relay piston 25 comes into contact with the relay valve member 37. Upon further movement, a sealing contact is established between the relay piston shaft 53 of the relay piston 25 and the relay valve member 37 such that the working port 7 is no longer connected to the exhaust 9 via the relay valve member orifice 45 and the guide channel 43. However, the relay piston force resulting from the pressure differential between the first relay valve chamber 23 and the second relay valve chamber 49 persists, since no pressure change has occurred in the second relay valve chamber 49. The relay piston 25 abutting the relay valve member 37 moves on and its relay piston shaft 53 pushes the relay piston member 37 against the biasing force of the valve member spring 50. The relay valve member 37 moves away from the valve seat 51 and a fluid connection between the supply port 3 and the working port 7 is established via the second relay valve chamber 49 and the working port channel 47.

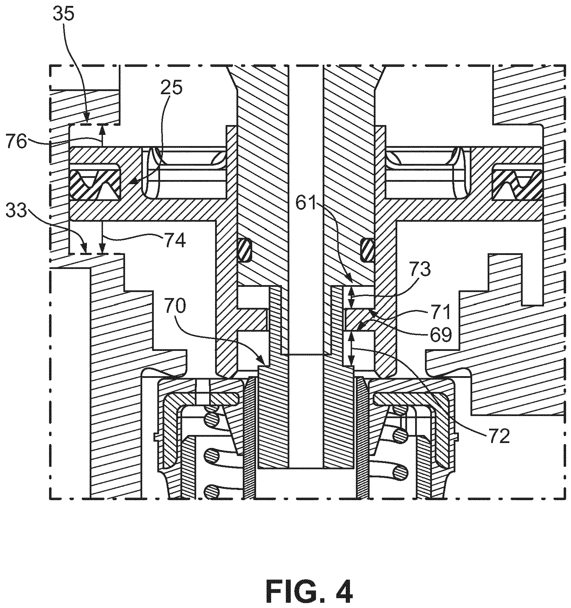

A pressure level of the brake release pressure pBR established in the second relay valve chamber 49 and provided to the working port 7 may differ from the supply pressure pS, since a pressure drop occurs in a gap (fluid passage) formed between the relay valve member 37 and the valve seat 51 (see Fig. 4). The pressure drop depends on the size of the gap such that a brake release pressure pBR having a low pressure level is established in the second relay valve chamber 49 immediately after the relay valve member 37 has been removed from the valve seat 51, since the gap is still relatively small. The pressure differential between the first relay valve chamber 23 and the second relay valve chamber 49 is decreased but still exits such that the relay piston 25 moves further towards the fully open position 31 and increases the size of the gap formed between the relay valve member 37 and the valve seat 51. The size of the gap and consequently the pressure level of the brake release pressure pBR increase (pressure drop in the gap decreases) until the pressure differential between the first relay valve chamber 23 and the second relay valve chamber 49 results in a relay piston force (arrow 52) equal to a biasing force exerted by the valve member spring 50. The brake release pressure pBR therefore depends on the control pressure pC. Preferably, the pressure level of the brake release pressure pBR substantially equals a pressure level of the control pressure pC. If the pressure level of the control pressure pC is high enough, the relay piston 25 is moved all the way to the fully open position 31 such that the relay piston 25 abuts the open position end stop 33. It is further preferred that the brake release pressure pBR substantially equals the supply pressure pS when the relay piston 25 is in the fully open position 31.

For returning the relay piston 25 to the exhaust position 29, the control pressure pC in the first relay valve chamber 23 is reduced until it is lower than the brake release pressure pBR in the second relay valve chamber 49. A force (not shown) resulting from the pressure differential moves the relay piston 25 back to the exhaust position 29 (upwards with respect to Fig. 2).

The relay piston 25 is slidably arranged on a safety piston 54, in particular on a safety piston shaft 55 of the safety piston 54. For receiving the safety piston shaft 55, the relay piston comprises a relay piston interface 56. In this embodiment, the relay piston interface 56 comprises a cylindrical inner wall 57 corresponding to a cylindrical guide portion 58 of the piston shaft 55. The guide portion 58 and the corresponding inner wall 57 may also have shapes differing from a cylindrical shape. The safety piston shaft 55 is inserted into the relay piston interface 56 from an insertion side 59.

The safety piston shaft 55 further comprises a fixing portion 60 extending from a guide portion end 61 of the guide portion 58. In the depicted embodiment, the fixing portion 60 is formed as a threaded pin 62 extending from the guide portion end 61. The threaded pin extends through a fixing hole 63 formed in a fixing flange 64 of the relay piston interface 56 (Fig. 3). The fixing flange 64 extends perpendicular to the inner wall 57 and a central axis of the fixing hole 63 is substantially congruent to central axis of the relay piston interface 56 and the safety piston shaft 55.

An inner thread of a fixing element 65 is threaded onto the threaded pin 62 from a locking side 66 such that the fixing element 65 is fixed to the safety piston shaft 55. In this embodiment, the fixing element 65 has a stepped outer profile. An extending portion 67 extends through the fixing hole 63 from the locking side 66 and has an outer diameter smaller than the inner diameter of the fixing hole 63. The outer diameter of the extending portion 67 may also be almost equal to the inner diameter of the fixing hole 63. The extending portion 67 extends from a contact portion 68 of the fixing element 65 having an outer diameter larger than the inner diameter of the fixing hole 63 such that the contact portion 68 is prevented from passing through the fixing hole 63. The guide portion 58 also has an outer diameter larger than the inner diameter of the fixing hole 63 such that the guide portion 58 is prevented from passing through the fixing hole 63.

The relay piston 25 is free to move along the safety piston shaft 55 until either a first flange side 69 of the fixing flange 64 abuts a contact face 70 of the fixing element 65 or a second flange side 71 of the fixing flange 64 abuts the guide portion end 61. The first flange side 69 oriented towards the fixing element 65 and the second flange side 71 oriented towards the guide portion end 61 form opposite sides of the fixing flange 64.

When the contact face 70 of the fixing element 65 is spaced apart from first flange side 69 a first fixing clearance 72 is formed in between these elements (Fig. 4). In a similar manner, a second fixing clearance 73 is formed between the second flange side 71 and the guide portion end 61, if both elements are spaced apart from each other. The first fixing clearance 72 equals a first relay piston clearance 74 between the relay piston 25 and open position end stop 33 of the relay cylinder 21 when the safety piston 54 is in a neutral position 75 shown in Fig. 1. A second relay piston clearance 76 between the relay piston 25 and the exhaust position end stop 35 equals the second fixing clearance 73 when the safety piston 54 is in the neutral position 75 while the second fixing clearance 73 reaches its maximum and the second relay piston clearance 76 vanishes when the safety piston 54 is in a safety position 77.

The relay piston 25 may only perform the above-described movement between the exhaust position 29 and the fully open position 31, when the safety piston 54 is in the neutral position 75. In this case, the relay piston 25 is able to move independently from the safety piston 54. The first fixing clearance 72 equals the first relay piston clearance 74 and the second fixing clearance 73 equals the second relay piston clearance 76 such that the safety piston 54 allows for a free movement of the relay cylinder 25 between the open position end stop 33 and the exhaust position end stop 35. In other embodiments, dependent movement of the relay piston 25 is also achievable by providing a first fixing clearance 72 smaller or larger than the first relay piston clearance 74 and/or by providing a second fixing clearance 73 smaller or larger than the second relay piston clearance 76. A first relay piston clearance 74 larger than the corresponding first fixing clearance 72 ensures free movement of the relay piston 25 without interference of the safety piston 54 during normal operation (when the safety piston 54 is in the neutral position 75).

Under certain conditions, for example if service brakes of the vehicle 200 (c.f. Fig. 1) cannot be applied due to a failure, it is necessary to reliably exhaust pressurized air from the park brake cylinders 136a, 136b (c.f. Fig. 1) in order to brake the vehicle 200 (c.f. Fig. 1). In these cases, exhausting air from the park brake cylinders 136a, 136b (c.f. Fig. 1) by independently moving the relay piston 25 to the exhaust position 29 may not be feasible.

The park brake module 1 may include the safety piston 54 for the purpose of increasing safety when e.g., air should be exhausted from brake cylinders 136a, 136b (c.f. Fig. 1) independent of relay piston 25's actuation. When in the neutral position 75, the safety piston allows for independent movement of the relay piston 25 as long as pressure pC at port 5 is received.

The safety piston 54 is slidably arranged in a safety cylinder 78. In order to apply the park brakes during an emergency, the safety piston 54 moves from the neutral position 75 to the safety position 77 shown in Fig. 3. The safety piston 54 divides the safety cylinder 78 into a first safety chamber 79 and a second safety chamber 80. In this embodiment and preferably, the first safety chamber 79 is in fluid communication to the environment. For moving the safety piston 54 to the safety position 77 a safety pressure pSF is supplied to the second safety chamber 80 resulting in a pressure difference between the first safety chamber 79 and the second safety chamber 80. A safety piston force represented by arrow 81 resulting from this pressure difference moves the safety piston 54 from the neutral position 75 to the safety position 77 (upwards with respect to Fig. 2). As the safety piston 54 moves upwards, the contact face 70 of the fixing element 65 comes into contact with the first flange side 69 of the fixing flange 64 of the relay piston 25. The safety piston 54 then pulls the relay piston 25 towards the exhaust position 29 even if a control pressure pC is applied to the first relay valve chamber 23.

An effective safety piston surface of the safety piston 54 (substantially defined by a surface area of a safety piston head 82 oriented towards the second safety chamber 80 in this embodiment) is larger than a corresponding effective relay piston surface of the relay piston 25 (substantially defined by a surface area of a relay piston head 83 oriented towards the first relay valve chamber 23). Hence, a safety piston effective area A1 is larger than a relay piston effective area A2. The pressure differential between each of the main sides of the relay piston 25 acts on the relay piston effective area A2 and results in a force on the relay piston 25. In an analogous manner, a pressure differential between the two main sides of the safety piston 54 acts on the safety piston effective area A1 and results in a force on the safety piston 54. In this embodiment, an effective area ratio (calculated dividing A1 through A2) is 1.2. A substantially identical pressure difference between the first relay valve chamber 23 and the second relay valve chamber 49 and the first safety chamber 79 and the second safety chamber 80 respectively results in a higher force on the safety piston 54 than on the relay piston 25. Due to its larger effective area A1, the safety piston 54 is able to override the relay piston 25 even if an identical pressure differential is acting on the relay piston 25 as well as the safety piston 54. This ensures the safety function in case a control pressure pC equal to the supply pressure pS is supplied to the control port 5 during an emergency situation, since the safety piston 54 may override the relay piston 25 when supply pressure pS is provided to the second safety chamber 80 as well. Even though the maximum available pressure differential then acts on both pistons 25, 54, the safety piston 54 is still able to pull the relay piston 25 towards the safety position 77 due to its larger effective area A2.

The relay piston effective area A2 and the safety piston effective area A1 are represented in Fig. 2 by dashed lines. It shall however be noted, that Fig. 2 is provided for illustrative purposes only and that all areas of the pistons 25, 54 effected by the pressure differential need to be taken into account for determining the effective areas A1, A2 (e.g. a surface area of the safety piston 54 oriented towards the relay piston 25 needs to be taken into account).

As long as the safety pressure pSF is applied to the second safety chamber 80, the safety piston 54 is moved to the safety position 77. A safety piston clearance 84 in the safety cylinder 78 defining a maximum range of movement of the safety piston 54 until it abuts a safety end stop 85 is larger than or equal to the maximum range of motion of the relay piston 25 in the relay cylinder 21. This ensures that the safety piston 54 pulls the relay piston 25 all the way to the exhaust position 29. The safety piston 54 then locks the relay piston 25 into the exhaust position 29 as long as it remains in the safety position 77. The park brake module 1 utilizes a positive connection between the safety piston 54 and the relay piston 25 that is established by the fixing element 65 engaging the fixing portion 60 of the safety piston shaft 55.

For providing the safety pressure pSF to the second safety chamber 80, a safety channel 86 is formed in the main body 11. The safety channel 86 defines a flow path 87 between the safety port 15 and the second safety chamber 80. As described with reference to Fig. 1, supply pressure pS is continuously supplied to the safety port 15 as safety pressure pSF in this embodiment.

In order to prevent the safety piston 54 from being continuously pushed to the safety position 77 an electronically controlled safety valve 88 is (partially) arranged in the flow path 87. In this embodiment, the electronically controlled safety valve 88 is a solenoid valve 89 connected to the ECU 116 (c.f. Fig. 1) via the park brake signal line 138 (c.f. Fig. 1) for receiving the park brake signals SPB. Dependent on the park brake signals SPB, the safety valve 88 either blocks the flow path 87 (in which case safety port 15 is connected to the atmosphere) or establishes a fluid connection between the safety port 15 and the second safety chamber 80 via channel 86 or path 87. Safety solenoid valve 89 normally works, e.g., as a 3/2 solenoid valve where each of the three ports are connected to port 15, path 87 and the atmosphere respectively. Furthermore, in an exemplary embodiment, safety solenoid valve 89 is normally in the closed position and is opened only when the parking brake signals SPB is provided.

In other embodiments of the brake system 200 (c.f. Fig. 1), pressurized air may be released from the second safety chamber 80 via the flow path 87 and the safety port 15. This could for example be the case if the safety pressure pSF would be supplied by the rear axle modulator 118.

It shall be noted, that even though the fixing element 65 is slidably received in the guide channel 43 of the guide element 39, it is still possible to exhaust air via the guide channel 43. The guide element 39 aligns the fixing element 65 along a longitudinal or vertical axis 144 (c.f. Fig. 2)..

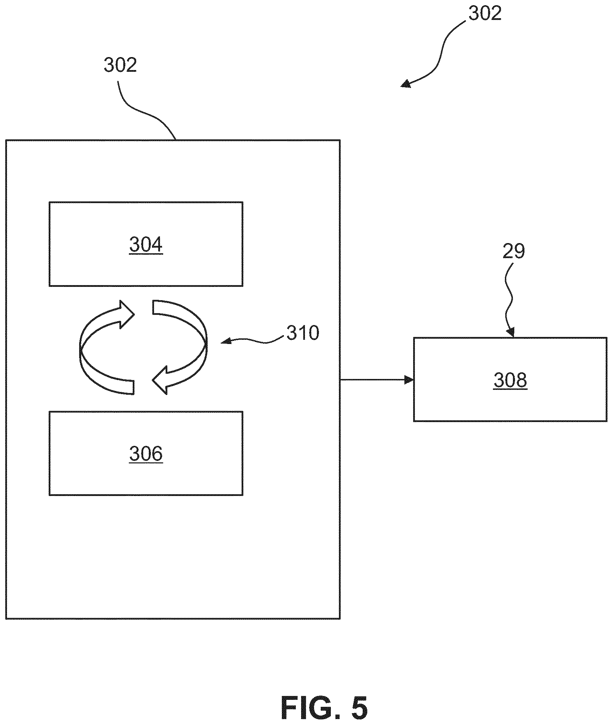

Fig. 5 illustrates a method 300 for controlling the park brake function of a brake system 100, performed using the parking brake module 1 discussed in conjunction with Figs. 1 to 4. In a normal operation function 302, the brake release pressure pBR is supplied to park brake cylinders 136a, 136b as a first step 304. As a second step 306, the park brake cylinders 136a, 136b are connected to the exhaust 9 by moving the relay piston 25 to the exhaust position 29. In the normal operation function 302 the safety piston 54 is in the neutral position 75 and the relay piston 25 moves independently of the safety piston 54, when, for instance, control pressure pC is received at control port 5. In case of an emergency, the safety piston 54 may override (third step 308) the normal operation function 302 of the relay valve unit 17. The safety piston 54 pulls the relay piston 25 to the exhaust position 29 such that the park brake cylinders 136a, 136b are vented and park brakes of the vehicle 200 are applied. As indicated by repeater arrow 310, the second step 306 of connecting the park brake cylinders 136a, 136b to the exhaust 9 and the third step 308 of providing the brake release pressure pBR to the park brake cylinders 136a, 136b may be repeated multiple times during the normal operation function 302.

### LIST OF REFERENCE SIGNS (PART OF THE DESCRIPTION)

- 1: park brake module
- 3: supply port
- 5: control port
- 7: working port
- 9: exhaust
- 11: main body
- 13: exhaust silencer
- 15: safety port
- 17: relay valve unit
- 19: safety unit
- 21: relay cylinder
- 23: first relay valve chamber
- 25: relay piston
- 27: arrow representing the working stroke
- 29: exhaust position
- 31: fully open position
- 33: open position end stop
- 35: exhaust position end stop
- 37: relay valve member
- 39: guide element
- 41: air guide
- 43: guide channel
- 45: relay valve member orifice
- 47: working port channel
- 49: second relay valve chamber
- 50: valve member spring
- 51: valve seat
- 52: arrow representing a relay piston force resulting from pressure differential acting on the relay piston
- 53: relay piston shaft
- 54: safety piston
- 55: safety piston shaft
- 56: relay piston interface
- 57: inner wall
- 58: guide portion
- 59: insertion side
- 60: fixing portion
- 61: guide portion end
- 62: threaded pin
- 63: fixing hole
- 64: fixing flange
- 65: fixing element
- 66: locking side
- 67: extending portion
- 68: contact portion
- 69: first flange side
- 70: contact face
- 71: second flange side
- 72: first fixing clearance
- 73: second fixing clearance
- 74: first relay piston clearance
- 75: neutral position
- 76: second relay piston clearance
- 77: safety position
- 78: safety cylinder
- 79: first safety chamber
- 80: second safety chamber
- 81: arrow representing a safety piston force
- 82: safety piston head
- 83: relay piston head
- 84: safety piston clearance
- 85: safety end stop
- 86: safety channel
- 87: flow path
- 88: safety valve
- 89: safety solenoid valve
- 100: brake system
- 102: first brake circuit
- 104: front axle brake circuit
- 106: second brake circuit
- 108: rear axle brake circuit
- 110: first compressed air supply
- 112: second compressed air supply
- 114: electropneumatic brake system
- 116: electronic control unit (ECU)
- 118: rear axle modulator
- 120: front axle modulator
- 122a, 122b: front axle ABS-modules
- 124a, 124b: front axle brake actuators
- 126: foot brake module
- 128: electropneumatic foot brake module
- 130: arrow
- 132: foot brake signal line
- 134a, 134b: rear axle brake actuators
- 136a, 136b: park brake cylinders
- 138: park brake signal line
- 140: control line
- 142: brake release pressure line
- 200: vehicle
- 202: commercial vehicle
- 300: method
- 302: normal operation function
- 304: first step
- 306: second step
- 308: third step
- 310: repeater arrow
- A1: safety piston effective area
- A2: relay piston effective area
- FA: front axle
- RA: rear axle
- pBFA: front axle brake pressure
- pBRA: rear axle brake pressure
- pBR: brake release pressure
- pC: control pressure
- pS: supply pressure
- pSF: safety pressure
- SCP: control pressure signal
- SPB: park brake signals
- SFB: foot brake signal
- SRA: rear axle brake signal

## Claims

1. A park brake module (1) for actuating park brake cylinders (136a, 136b) of a commercial vehicle (202), the park brake module (1) comprising
a control port (5) for receiving a control pressure (pC),
a supply port (3) for receiving supply pressure (pS),
an exhaust (9),
a working port (7) for providing a brake release pressure (pBR) to the park brake cylinders (136a, 136b),
a relay valve unit (17) for receiving the control pressure (pC) and for providing the brake release pressure (pBR) to the working port (7) dependent on the control pressure (pC),
a safety port (15) for receiving a safety pressure (pSF),
a safety unit (19) for connecting the working port (7) to the exhaust (9), when the safety pressure (pSF) is supplied to the safety unit (19) via the safety port (15),
wherein the relay valve unit (17) comprises a relay piston (25) slidably arranged in a relay cylinder (21) for performing a working stroke between an exhaust position (29) and a fully open position (31), wherein the working port (7) is in fluid communication with the exhaust (9) when the relay piston (25) is in the exhaust position (29), and wherein the brake release pressure (pBR) is provided to the working port (7) when the relay piston (25) is in at least a partially open position,
wherein the safety unit (19) comprises a safety piston (54) slidably arranged in a safety cylinder (78) for performing a safety stroke between a neutral position (75) and a safety position (77), wherein the safety piston (54) is slidable from the neutral position (75) to the safety position (77) by providing the safety pressure (pSF) to the safety unit (19), wherein the safety piston (54) and the relay piston (25) are operatively connected such that
the relay piston (25) is slidable between the exhaust position (29) and the fully open position (31) independently of the safety piston (54) when the safety piston (54) is in the neutral position (75), and such that the safety piston (54) is configured to at least partially move the relay piston (25) towards the exhaust position (29) when advancing the safety position (77), wherein a first safety piston effective area (A1) of the safety piston (77) is larger than a relay piston effective area (A2) of the relay piston (25), and wherein a first effective area ratio between the first safety piston effective area and the relay piston effective area has a value of 1.2 or larger.

2. The park brake module (1) according to claim 1, wherein the safety stroke of the safety piston (54) is equal to or larger than the working stroke of the relay piston (25).

3. The park brake module (1) according to claim 1 or 2, wherein the safety piston (54) and the relay piston (25) are positively connected when the safety piston (54) is in the safety position (77).

4. The park brake module (1) according to any of the preceding claims, wherein the relay piston (25) is slidably arranged on a safety piston shaft (55) of the safety piston (54).

5. The park brake module (1) according to claim 3 or 4, further comprising a fixing element (65) connected to the safety piston (54), and wherein a contact face (70) of the fixing element (65) abuts the relay piston (25) on a locking side (66) when the safety piston (54) is in the safety position (77).

6. The park brake module (1) according to claim 4 and 5, wherein the safety piston shaft (55) comprises a guide portion (58) for guiding the relay piston (25) and a fixing portion (60) for engaging the fixing element (65) of the park brake module (1), wherein the fixing portion (60) extends from a guide portion end (61) of the guide portion (58).

7. The park brake module (1) according to claim 6, wherein the relay piston (25) comprises a relay piston interface (56) for receiving the safety piston shaft (55), and wherein the relay piston interface (56) comprises a fixing flange (64) having a fixing hole (63).

8. The park brake module (1) according to claim 7, wherein the fixing portion (60) and/or the fixing element (65) extends through the fixing hole (63) from an insertion side (59) of the relay piston (25) opposite the locking side (66), and wherein the fixing flange (64) is configured to abut the safety piston shaft (55).

9. The park brake module (1) according to any of the claims 6 to 8, wherein a first fixing clearance (72) between the contact face (70) of the fixing element (65) and a first flange side (69) of the fixing flange (64) oriented towards the contact face (70) equals a first relay piston clearance (74) between the relay piston (25) and a open position end stop (33) of the relay cylinder (21) when the safety piston (54) is in the neutral position (75), and wherein the contact face (70) abuts the first flange side (69) when the safety piston (54) is in the safety position (77).

10. The park brake module (1) according to any of the claims 6 to 9, wherein a second relay piston clearance (76) between the relay piston (25) and a exhaust position end stop (35) of the relay cylinder (21) equals a second fixing clearance (73) between the guide portion end (61) and a second flange side (71) of the fixing flange (64) when the safety piston (54) is in the neutral position (75), and wherein the second relay piston clearance (76) vanishes and the second fixing clearance (73) is maximized when the safety piston (61) is in the safety position (77).

11. The park brake module (1) according to any of the claims 5 to 10, wherein the fixing element (65) is slidably received in a guide element (39) of the relay valve unit (17).

12. The park brake module (1) according to claim 11, wherein the guide element (39) is configured for guiding a relay valve member (37) of the relay valve unit (17), wherein the relay piston (25) is configured to move the relay valve member (37).

13. The park brake module (1) according to any of the preceding claims, further comprising an electronically controlled safety valve (88) arranged in a flow path (87) between the safety port (15) and the safety cylinder (78), wherein the safety valve (88) is configured to block the flow path (87) or to connect the safety port (15) and the safety cylinder (78) based on electronic control signals.

14. A method (300) for controlling a park brake function of a brake system (100) using the park brake module (1) as claimed in any one of the above claims, the method (300) comprising the steps of:
- providing a brake release pressure (pBR) to park brake cylinders (136a, 136b) via a relay valve unit (17) as a normal operation function (302), and
- overriding the normal operation function (302) of the relay valve unit (17) by a safety unit (19) for exhausting the park brake cylinders (136a, 136b),
wherein a relay piston (25) of the relay valve unit (17) is movable independently of the safety unit (19) during the normal operation function (302).

15. A brake system (100) for a commercial vehicle (202), comprising a park brake module (1) according to any of the preceding claims 1 to 13.

16. A commercial vehicle (202) comprising a brake system (100) according to claim 15.

## Patentansprüche

1. Feststellbremsmodul (1) zum Betätigen von Feststellbremszylindern (136a, 136b) eines Nutzfahrzeugs (202), das Feststellbremsmodul (1) umfassend
einen Steueranschluss (5) zum Empfangen eines Steuerdrucks (pC),
einen Versorgungsanschluss (3) zum Empfangen von Versorgungsdruck (pS),
einen Auslass (9),
einen Arbeitsanschluss (7) zum Bereitstellen eines Bremslösedrucks (pBR) an die Feststellbremszylinder (136a, 136b),
eine Relaisventileinheit (17) zum Empfangen des Steuerdrucks (pC) und zum Bereitstellen des Bremslösedrucks (pBR) an den Arbeitsanschluss (7) in Abhängigkeit von dem Steuerdruck (pC),
einen Sicherheitsanschluss (15) zum Empfangen eines Sicherheitsdrucks (pSF),
eine Sicherheitseinheit (19) zum Verbinden des Arbeitsanschlusses (7) mit dem Auslass (9), wenn der Sicherheitsdruck (pSF) der Sicherheitseinheit (19) über den Sicherheitsanschluss (15) zugeführt wird,
wobei die Relaisventileinheit (17) einen Relaiskolben (25) umfasst, der in einem Relaiszylinder (21) verschiebbar angeordnet ist, zum Durchführen eines Arbeitshubs zwischen einer Auslassposition (29) und einer vollständig geöffneten Position (31), wobei der Arbeitsanschluss (7) in Fluidkommunikation mit dem Auslass (9) steht, wenn sich der Relaiskolben (25) in der Auslassposition (29) befindet, und wobei der Bremslösedruck (pBR) an den Arbeitsanschluss (7) bereitgestellt wird, wenn sich der Relaiskolben (25) in mindestens einer teilweise geöffneten Position befindet,
wobei die Sicherheitseinheit (19) einen Sicherheitskolben (54) umfasst, der in einem Sicherheitszylinder (78) verschiebbar angeordnet ist, zum Durchführen eines Sicherheitshubs zwischen einer Neutralposition (75) und einer Sicherheitsposition (77), wobei der Sicherheitskolben (54) von der Neutralposition (75) in die Sicherheitsposition (77) verschiebbar ist, durch das Bereitstellen des Sicherheitsdrucks (pSF) an die Sicherheitseinheit (19), wobei der Sicherheitskolben (54) und der Relaiskolben (25) derart wirkverbunden sind, dass
der Relaiskolben (25) zwischen der Auslassposition (29) und der vollständig geöffneten Position (31) unabhängig von dem Sicherheitskolben (54) verschiebbar ist, wenn sich der Sicherheitskolben (54) in der Neutralposition (75) befindet, und derart, dass der Sicherheitskolben (54) konfiguriert ist, um den Relaiskolben (25) bei einem Vorrücken in die Sicherheitsposition (77) mindestens teilweise in Richtung der Auslassposition (29) zu bewegen, wobei eine erste Sicherheitskolbenwirkoberfläche (A1) des Sicherheitskolbens (77) größer als eine Relaiskolbenwirkoberfläche (A2) des Relaiskolbens (25) ist, und wobei ein erstes Wirkoberflächenverhältnis zwischen der ersten Sicherheitskolbenwirkoberfläche und der Relaiskolbenwirkoberfläche einen Wert von 1,2 oder größer aufweist.

2. Feststellbremsmodul (1) nach Anspruch 1, wobei der Sicherheitshub des Sicherheitskolbens (54) gleich oder größer als der Arbeitshub des Relaiskolbens (25) ist.

3. Feststellbremsmodul (1) nach Anspruch 1 oder 2, wobei der Sicherheitskolben (54) und der Relaiskolben (25) formschlüssig verbunden sind, wenn sich der Sicherheitskolben (54) in der Sicherheitsposition (77) befindet.

4. Feststellbremsmodul (1) nach einem der vorstehenden Ansprüche, wobei der Relaiskolben (25) auf einem Sicherheitskolbenschaft (55) des Sicherheitskolbens (54) verschiebbar angeordnet ist.

5. Feststellbremsmodul (1) nach Anspruch 3 oder 4, ferner umfassend ein Fixierelement (65), das mit dem Sicherheitskolben (54) verbunden ist, und wobei eine Kontaktfläche (70) des Fixierelements (65) an dem Relaiskolben (25) an einer Verriegelungsseite (66) anliegt, wenn sich der Sicherheitskolben (54) in der Sicherheitsposition (77) befindet.

6. Feststellbremsmodul (1) nach Anspruch 4 und 5, wobei der Sicherheitskolbenschaft (55) einen Führungsabschnitt (58) zum Führen des Relaiskolbens (25) und einen Fixierabschnitt (60) zum Ineingriffnehmen des Fixierelements (65) des Feststellbremsmoduls (1) umfasst, wobei sich der Fixierabschnitt (60) von einem Führungsabschnittsende (61) des Führungsabschnitts (58) erstreckt.

7. Feststellbremsmodul (1) nach Anspruch 6, wobei der Relaiskolben (25) eine Relaiskolbenschnittstelle (56) zum Empfangen des Sicherheitskolbenschafts (55) umfasst, und wobei die Relaiskolbenschnittstelle (56) einen Fixierflansch (64) umfasst, der ein Fixierloch (63) aufweist.

8. Feststellbremsmodul (1) nach Anspruch 7, wobei sich der Fixierabschnitt (60) und/oder das Fixierelement (65) durch das Fixierloch (63) von einer Einsteckseite (59) des Relaiskolbens (25) erstreckt, die der Verriegelungsseite (66) gegenüberliegt, und wobei der Fixierflansch (64) konfiguriert ist, um an dem Sicherheitskolbenschaft (55) anzuliegen.

9. Feststellbremsmodul (1) nach einem der Ansprüche 6 bis 8, wobei ein erstes Fixierspiel (72) zwischen der Kontaktfläche (70) des Fixierelements (65) und einer ersten Flanschseite (69) des Fixierflansches (64), die in Richtung der Kontaktfläche (70) ausgerichtet ist, gleich einem ersten Relaiskolbenspiel (74) zwischen dem Relaiskolben (25) und einem Endanschlag (33) einer geöffneten Position des Relaiszylinders (21) ist, wenn sich der Sicherheitskolben (54) in der Neutralposition (75) befindet, und wobei die Kontaktfläche (70) an der ersten Flanschseite (69) anliegt, wenn sich der Sicherheitskolben (54) in der Sicherheitsposition (77) befindet.

10. Feststellbremsmodul (1) nach einem der Ansprüche 6 bis 9, wobei ein zweites Relaiskolbenspiel (76) zwischen dem Relaiskolben (25) und einem Endanschlag (35) einer Auslassposition des Relaiszylinders (21) gleich einem zweiten Fixierspiel (73) zwischen dem Führungsabschnittsende (61) und einer zweiten Flanschseite (71) des Fixierflansches (64) ist, wenn sich der Sicherheitskolben (54) in der Neutralposition (75) befindet, und wobei das zweite Relaiskolbenspiel (76) verschwindet und das zweite Fixierspiel (73) maximiert ist, wenn sich der Sicherheitskolben (61) in der Sicherheitsposition (77) befindet.

11. Feststellbremsmodul (1) nach einem der Ansprüche 5 bis 10, wobei das Fixierelement (65) in einem Führungselement (39) der Relaisventileinheit (17) verschiebbar empfangen ist.

12. Feststellbremsmodul (1) nach Anspruch 11, wobei das Führungselement (39) zum Führen eines Relaisventilglied (37) der Relaisventileinheit (17) konfiguriert ist, wobei der Relaiskolben (25) konfiguriert ist, um das Relaisventilglied (37) zu bewegen.

13. Feststellbremsmodul (1) nach einem der vorstehenden Ansprüche, ferner umfassend ein elektronisch gesteuertes Sicherheitsventil (88), das in einem Strömungspfad (87) zwischen dem Sicherheitsanschluss (15) und dem Sicherheitszylinder (78) angeordnet ist, wobei das Sicherheitsventil (88) konfiguriert ist, um den Strömungspfad (87) zu blockieren oder den Sicherheitsanschluss (15) und den Sicherheitszylinder (78) basierend auf elektronischen Steuersignalen zu verbinden.

14. Verfahren (300) zum Steuern einer Parkbremsfunktion eines Bremssystems (100) unter Verwendung des Feststellbremsmoduls (1) nach einem der vorstehenden Ansprüche, das Verfahren (300) umfassend die Schritte:
- Bereitstellen eines Bremslösedrucks (pBR) an Feststellbremszylinder (136a, 136b) über eine Relaisventileinheit (17) als eine Normalbetriebsfunktion (302), und
- Außerkraftsetzen der Normalbetriebsfunktion (302) der Relaisventileinheit (17) durch eine Sicherheitseinheit (19) zum Auslassen des Feststellbremszylinders (136a, 136b),
wobei ein Relaiskolben (25) der Relaisventileinheit (17) während der Normalbetriebsfunktion (302) unabhängig von der Sicherheitseinheit (19) bewegbar ist.

15. Bremssystem (100) für ein Nutzfahrzeug (202), umfassend ein Feststellbremsmodul (1) nach einem der vorstehenden Ansprüche 1 bis 13.

16. Nutzfahrzeug (202), umfassend ein Bremssystem (100) nach Anspruch 15.

## Revendications

1. Module de frein de stationnement (1) permettant d'actionner des cylindres de frein de stationnement (136a, 136b) d'un véhicule utilitaire (202), le module de frein de stationnement (1) comprenant
un orifice de commande (5) permettant de recevoir une pression de commande (pC),
un orifice d'alimentation (3) permettant de recevoir une pression d'alimentation (pS),
un échappement (9),
un orifice de travail (7) permettant de fournir une pression de relâchement de frein (pBR) aux cylindres de frein de stationnement (136a, 136b),
une unité de valve relais (17) permettant de recevoir la pression de commande (pC) et permettant de fournir la pression de relâchement de frein (pBR) à l'orifice de travail (7) en dépendance de la pression de commande (pC),
un orifice de sécurité (15) permettant de recevoir une pression de sécurité (pSF),
une unité de sécurité (19) permettant de raccorder l'orifice de travail (7) à l'échappement (9), lorsque la pression de sécurité (pSF) est alimentée à l'unité de sécurité (19) par l'intermédiaire de l'orifice de sécurité (15),
dans lequel l'unité de valve relais (17) comprend un piston relais (25) agencé de manière coulissante dans un cylindre relais (21) permettant de mettre en œuvre une course de travail entre une position d'échappement (29) et une position complètement ouverte (31), dans lequel l'orifice de travail (7) est en communication fluidique avec l'échappement (9) lorsque le piston relais (25) est dans la position d'échappement (29), et dans lequel la pression de relâchement de frein (pBR) est fournie à l'orifice de travail (7) lorsque le piston relais (25) est dans une position au moins partiellement ouverte,
dans lequel l'unité de sécurité (19) comprend un piston de sécurité (54) agencé de manière coulissante dans un cylindre de sécurité (78) permettant de mettre en œuvre une course de sécurité entre une position neutre (75) et une position de sécurité (77), dans lequel le piston de sécurité (54) peut coulisser de la position neutre (75) à la position de sécurité (77) en fournissant la pression de sécurité (pSF) à l'unité de sécurité (19), dans lequel le piston de sécurité (54) et le piston relais (25) sont fonctionnellement raccordés de telle sorte que
le piston relais (25) peut coulisser entre la position d'échappement (29) et la position complètement ouverte (31) indépendamment du piston de sécurité (54) lorsque le piston de sécurité (54) est dans la position neutre (75), et de telle sorte que le piston de sécurité (54) est conçu pour déplacer au moins partiellement le piston relais (25) en direction de la position d'échappement (29) lorsqu'il avance à la position de sécurité (77), dans lequel une première aire effective de piston de sécurité (A1) du piston de sécurité (77) est plus grande qu'une aire effective de piston relais (A2) du piston relais (25), et dans lequel un premier rapport d'aire effective entre la première aire effective de piston de sécurité et l'aire effective de piston relais a une valeur de 1,2 ou plus grande.

2. Module de frein de stationnement (1) selon la revendication 1, dans lequel la course de sécurité du piston de sécurité (54) est égale ou supérieure à la course de travail du piston relais (25).

3. Module de frein de stationnement (1) selon la revendication 1 ou 2, dans lequel le piston de sécurité (54) et le piston relais (25) sont raccordés positivement lorsque le piston de sécurité (54) est dans la position de sécurité (77).

4. Module de frein de stationnement (1) selon l'une quelconque des revendications précédentes, dans lequel le piston relais (25) est agencé de manière coulissante sur une tige de piston de sécurité (55) du piston de sécurité (54).

5. Module de frein de stationnement (1) selon la revendication 3 ou 4, comprenant en outre un élément de fixation (65) relié au piston de sécurité (54), et dans lequel une face de contact (70) de l'élément de fixation (65) vient en butée contre le piston relais (25) sur un côté de verrouillage (66) lorsque le piston de sécurité (54) est dans la position de sécurité (77).

6. Module de frein de stationnement (1) selon la revendication 4 et 5, dans lequel la tige de piston de sécurité (55) comprend une partie de guidage (58) permettant de guider le piston relais (25) et une partie de fixation (60) permettant de venir en prise avec l'élément de fixation (65) du module de frein de stationnement (1), dans lequel la partie de fixation (60) s'étend à partir d'une extrémité de partie de guidage (61) de la partie de guidage (58).

7. Module de frein de stationnement (1) selon la revendication 6, dans lequel le piston relais (25) comprend une interface de piston relais (56) permettant de recevoir la tige de piston de sécurité (55), et dans lequel l'interface de piston relais (56) comprend une bride de fixation (64) ayant un trou de fixation (63).

8. Module de frein de stationnement (1) selon la revendication 7, dans lequel la partie de fixation (60) et/ou l'élément de fixation (65) s'étendent à travers le trou de fixation (63) à partir d'un côté d'insertion (59) du piston relais (25) opposé au côté de verrouillage (66), et dans lequel la bride de fixation (64) est conçue pour venir en butée contre la tige de piston de sécurité (55).

9. Module de frein de stationnement (1) selon l'une quelconque des revendications 6 à 8, dans lequel un premier jeu de fixation (72) entre la face de contact (70) de l'élément de fixation (65) et un premier côté de bride (69) de la bride de fixation (64) orienté vers la face de contact (70) est égal à un premier jeu de piston relais (74) entre le piston relais (25) et une butée d'arrêt de position ouverte (33) du cylindre relais (21) lorsque le piston de sécurité (54) est dans la position neutre (75), et dans lequel la face de contact (70) vient en butée contre le premier côté de bride (69) lorsque le piston de sécurité (54) est dans la position de sécurité (77).

10. Module de frein de stationnement (1) selon l'une quelconque des revendications 6 à 9, dans lequel un second jeu de piston relais (76) entre le piston relais (25) et une butée d'arrêt de position d'échappement (35) du cylindre relais (21) est égal à un second jeu de fixation (73) entre l'extrémité de partie de guidage (61) et un second côté de bride (71) de la bride de fixation (64) lorsque le piston de sécurité (54) est dans la position neutre (75), et dans lequel le second jeu de piston relais (76) disparaît et le second jeu de fixation (73) est maximisé lorsque le piston de sécurité (61) est dans la position de sécurité (77).

11. Module de frein de stationnement (1) selon l'une quelconque des revendications 5 à 10, dans lequel l'élément de fixation (65) est reçu de manière coulissante dans un élément de guidage (39) de l'unité de valve relais (17).

12. Module de frein de stationnement (1) selon la revendication 11, dans lequel l'élément de guidage (39) est conçu pour guider un élément de valve relais (37) de l'unité de valve relais (17), dans lequel le piston relais (25) est conçu pour déplacer l'élément de valve relais (37).

13. Module de frein de stationnement (1) selon l'une quelconque des revendications précédentes, comprenant en outre une valve de sécurité (88) à commande électronique agencée dans un trajet d'écoulement (87) entre l'orifice de sécurité (15) et le cylindre de sécurité (78), dans lequel la valve de sécurité (88) est conçue pour bloquer le trajet d'écoulement (87) ou pour raccorder l'orifice de sécurité (15) et le cylindre de sécurité (78) en fonction de signaux de commande électroniques.

14. Procédé (300) permettant de commander une fonction de frein de stationnement d'un système de frein (100) à l'aide du module de frein de stationnement (1) selon l'une quelconque des revendications ci-dessus, le procédé (300) comprenant les étapes consistant à :
- fournir une pression de relâchement de frein (pBR) à des cylindres de frein de stationnement (136a, 136b) par l'intermédiaire d'une unité de valve relais (17) en tant que fonction de fonctionnement normal (302), et
- annuler la fonction de fonctionnement normal (302) de l'unité de valve relais (17) par une unité de sécurité (19) pour un échappement des cylindres de frein de stationnement (136a, 136b),
dans lequel un piston relais (25) de l'unité de valve relais (17) peut être déplacé indépendamment de l'unité de sécurité (19) pendant la fonction de fonctionnement normal (302).

15. Système de frein (100) destiné à un véhicule utilitaire (202), comprenant un module de frein de stationnement (1) selon l'une quelconque des revendications 1 à 13 précédentes.

16. Véhicule utilitaire (202) comprenant un système de frein (100) selon la revendication 15.
